# FASCICULE DE BREVET EUROPEEN

(11) **EP 2 809 495 B1**
(45) Date de publication et mention de la délivrance du brevet: **04.05.2016**
(21) Numéro de dépôt: 13706583.5
(22) Date de dépôt: 29.01.2013
(51) Int. Cl.: B29C 51/16, B29C 51/10, B29C 51/20, B29C 51/04

(54) **BLOC DE MOULE POUR THERMOFORMAGE ET PROCÉDÉ DE FABRICATION DE RÉCIPIENTS**
FORMEINHEIT ZUM THERMOFORMEN UND VERFAHREN ZUR HERSTELLUNG VON BEHÄLTERN
MOLD UNIT FOR THERMOFORMING AND METHOD FOR PRODUCING CONTAINERS

(30) Priorité: 30.01.2012 FR 1250850
(43) Date de publication de la demande: 10.12.2014
(73) Titulaire: ERCA, 91940 Les Ulis (FR)
(72) Inventeur: FAURE, Jean-Luc, F-91800 Brunoy (FR); LORCET, Stéphane, F-02220 Cry Salsogne (FR)
(74) Mandataire: Calvo de Nó, Rodrigo
(86) Numéro de dépôt international: PCT/FR2013/050178
(87) Numéro de publication internationale: WO 2013/114033

(56) Documents cités:
- FR-A1- 2 528 349
- FR-A1- 2 858 263

## Description

La présente invention concerne un bloc de moule, et en particulier un bloc de moule présentant au moins une chambre de thermoformage apte à recevoir une préforme thermoplastique, ladite chambre de thermoformage étant définie par une surface interne et une ouverture axiale du bloc de moule.

De tels blocs de moule sont notamment utilisés dans la production de récipients, en particulier de récipients alimentaires, dans des installations de thermoformage. Ces récipients reçoivent typiquement une banderole de décor permettant notamment l'identification du contenu de l'emballage.

Un bloc de moule de ce type, ayant les caractéristiques du préambule de la revendication 1, est décrit dans le brevet français 2 858 263. Toutefois, ce bloc de moule de l'art antérieur présente l'inconvénient de résulter en un récipient présentant un épaulement correspondant à un épaulement dans la chambre de thermoformage servant à faire butée à la banderole de décor lors de son introduction. L'épaulement dans le récipient le fragilise et réduit sa résistance à la compression verticale. En outre, il peut être esthétiquement désirable de produire un récipient aux parois lisses.

La présente invention vise à remédier à ces inconvénients.

Dans au moins un mode de mise en oeuvre de la présente invention, ce but est atteint grâce au fait que le bloc de moule comporte un corps principal, au moins une pièce mobile de fond de moule située d'un côté opposé à ladite ouverture axiale, et au moins un organe rétractable. La pièce mobile de fond de moule peut se déplacer, par rapport audit corps principal, entre une position fermée contre ledit corps principal et une position ouverte, dans laquelle la pièce mobile de fond de moule est séparée du corps principal, en direction opposée à ladite ouverture axiale, par une ouverture latérale. L'au moins un organe rétractable est apte à pénétrer à travers ladite ouverture latérale en position ouverte de la pièce mobile de fond de moule pour former au moins un épaulement escamotable situé dans la chambre de thermoformage au droit de ladite ouverture.

Ainsi, la surface interne de la chambre de thermoformage pourra être sensiblement lisse et libre d'épaulements en fin de soufflage, après fermeture de la pièce mobile de fond de moule contre le corps principal, et rétraction de l'au moins un organe rétractable en dehors de la chambre de thermoformage. Le matériau thermoplastique de la préforme pourra épouser cette surface interne lisse de la chambre de thermoformage pour produire un récipient sans épaulements.

En particulier, afin de soutenir la banderole à plusieurs points de son pourtour, le bloc de moule peut comprendre une pluralité d'organes rétractables apte à pénétrer à travers ladite ouverture latérale en position ouverte de la pièce de fond de moule pour former des épaulements escamotables dans la chambre de thermoformage au droit de l'ouverture axiale.

Afin d'assurer le déploiement automatique de l'organe rétractable à l'intérieur de la chambre de thermoformage pour former l'épaulement escamotable lors de l'ouverture de la pièce mobile de fond de moule, le bloc de moule peut comporter en outre au moins un ressort pour actionner la pénétration dudit organe rétractable dans la chambre de thermoformage à travers l'ouverture latérale.

D'autre part, pour assurer la rétraction automatique de l'organe rétractable vers l'extérieur de la chambre de thermoformage lors de la fermeture de la pièce mobile de fond de moule, ledit épaulement peut former une surface de contact avec ledit corps principal, et ledit organe rétractable peut aussi comporter une surface de contact avec ladite pièce mobile de fond de moule, lesdites surfaces de contact avec le corps principal et la pièce mobile de fond de moule étant arrangées avec un tel angle qu'un déplacement de la pièce de fond de moule de ladite position ouverte à ladite position fermée actionne la rétraction de l'organe rétractable contre ledit ressort.

Le bloc de moule peut notamment comporter en outre un actionneur, en particulier un actionneur fluidique pour déplacer ladite pièce mobile de fond de moule entre lesdites positions fermée et ouverte.

Une même ouverture, au droit de l'au moins un épaulement dans sa position de réception de la banderole de décor, peut avantageusement servir à introduire la banderole de décor et à faire pénétrer le piston dans la chambre de thermoformage.

Le bloc de moule comporte avantageusement une pluralité de chambres de thermoformage, ce qui permet d'augmenter la cadence de production en formant une pluralité de récipients en parallèle.

Une même pièce mobile de fond de moule peut fermer le fond de plusieurs chambres de thermoformage, évitant ainsi de multiplier le nombre de pièces mobiles avec le nombre de chambres de thermoformage.

Le bloc de moule est avantageusement apte à basculer entre au moins une position de formage et soufflage et une position d'introduction d'une banderole et/ou démoulage d'une pièce moulée. Le bloc de moule peut ainsi recevoir la banderole dans une première orientation, et le piston de thermoformage dans une deuxième orientation, ce qui permet de réduire l'encombrement de l'installation de thermoformage tout en augmentant la cadence de production, en particulier si l'installation comporte plusieurs blocs de moule se relevant aux différentes orientations, pour effectuer simultanément l'introduction de la banderole dans un premier bloc de moule et le thermoformage d'un récipient dans un deuxième bloc de moule. Plusieurs modes de mise en oeuvre de blocs de moule basculants ont été décrits dans la demande internationale de brevet WO 2006/051237.

L'invention se rapporte aussi à une installation pour la fabrication de récipients par thermoformage. Dans au moins un mode de réalisation, cette installation comporte ledit bloc de moule, un dispositif de chauffage de la préforme thermoplastique, un piston de formage de la préforme thermoplastique apte à pénétrer, par ladite ouverture, dans la chambre de thermoformage, et un dispositif pneumatique de soufflage de la préforme thermoplastique contre une surface interne de l'au moins une chambre de thermoformage.

L'invention se rapporte aussi à un procédé de fabrication de récipients par thermoformage dans cette installation. Ce procédé comporte les étapes suivantes :
introduction d'une banderole de décor dans ladite chambre de thermoformage du bloc de moule pour arriver en butée contre ledit épaulement initialement présent dans la chambre de thermoformage dans une position de réception de la banderole de décor avec la pièce de fond de moule en position ouverte ;
formage d'une préforme thermoplastique chaude par un piston pénétrant dans la chambre de thermoformage; et
soufflage de la préforme contre une surface interne de la chambre de thermoformage.

Afin de pouvoir fabriquer un récipient à surface lisse, dans au moins un mode de réalisation de ce procédé, ladite pièce de fond de moule se déplace jusqu'à la position fermée, de manière à escamoter ledit épaulement, avant la fin de l'étape de soufflage.

En particulier, la banderole de décor peut être introduite dans la chambre de thermoformage, et le piston pénétrer dans la chambre de thermoformage, à travers l'ouverture axiale.

En outre, le procédé peut comporter en outre une étape de basculement du bloc de moule entre l'étape d'introduction de la banderole et l'étape de formage, notamment afin de faciliter l'usage de la même ouverture pour l'introduction de la banderole de décor et du piston dans la chambre de thermoformage.

La préforme forme avantageusement partie d'une bande thermoplastique, ce qui facilite l'approvisionnement de l'appareil de thermoformage par défilement de cette bande.

Le procédé comporte encore plus avantageusement, après l'étape de soufflage, une étape de démoulage du récipient mettant en oeuvre un basculement du moule et un défilement simultané de la bande thermoplastique, ce qui permet d'augmenter encore la cadence de production. Ce basculement peut être accompagné par un retrait du bloc de moule en direction axiale, en particulier, si le moule est placé en dessous de la bande thermoplastique, par une descente du bloc de moule. Toutefois, d'autres méthodes de démoulage, comme par exemple par simple retrait du bloc de moule en direction axiale, peuvent également être envisagées.

L'invention sera bien comprise et ses avantages apparaîtront mieux, à la lecture de la description détaillée qui suit, d'un mode de réalisation représenté à titre d'exemple non limitatif. La description se réfère aux dessins annexés sur lesquels :
- la figure 1 une vue schématique d'une installation pouvant utiliser un mode de réalisation du bloc de moule selon l'invention ;
- la figure 2A est une coupe longitudinale d'un bloc de moule suivant un mode de réalisation de l'invention lors de l'étape d'introduction d'une banderole de décor dans un procédé de thermoformage ;
- la figure 2B est une vue du haut du bloc de moule de la figure 2A ;
- la figure 3 est une coupe longitudinale de la même chambre lors de l'étape, subséquente dans ce procédé, de formage par un piston ;
- la figure 4A est une coupe longitudinale de la même chambre lors de l'étape, subséquente dans ce procédé, de soufflage ; et
- la figure 4B est une vue du haut du bloc de moule de la figure 4A.

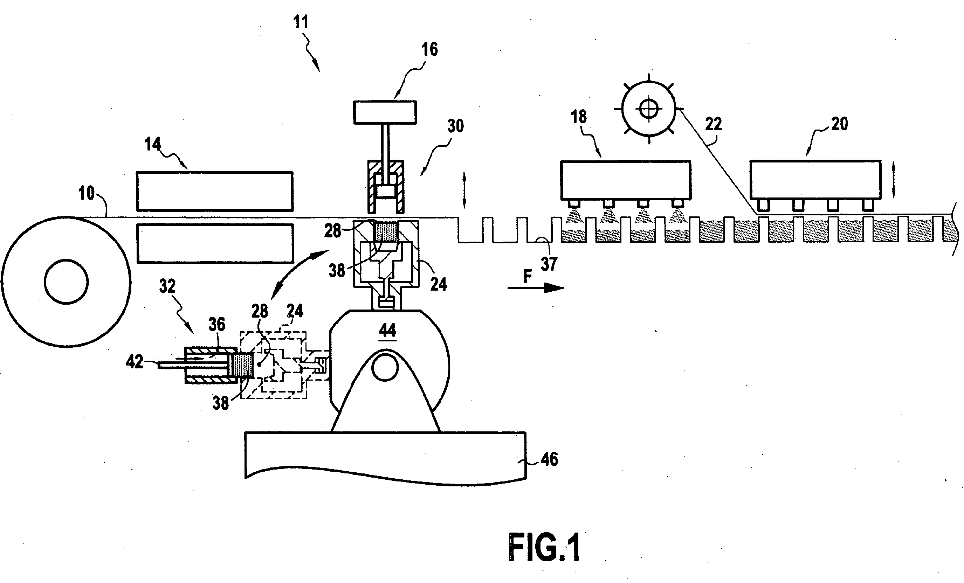

L'installation représentée sur la figure 1 met en oeuvre le procédé objet de l'invention dans son premier mode de mise en oeuvre. Elle comprend plusieurs stations au travers desquelles est entraînée pas à pas une bande 10 en matériau thermoplastique, par des moyens d'entraînement (non représentés ici). Considérée successivement dans le sens F d'avancement de la bande, l'installation comprend une station 14 de chauffage, une station 16 de thermoformage, une station 18 de remplissage des récipients 37 thermoformés et une station 20 de fermeture de ces récipients 37 par scellement, au travers de leurs ouvertures, d'une bande de fermeture 22.

Bien entendu, l'invention peut s'appliquer également au thermoformage de récipients dans un matériau thermoplastique se présentant sous une autre forme que celle d'une bande continue, par exemple sous la forme de plaquettes ou jeton individuels à partir de chacun desquels un récipient ou un groupe de récipients sont thermoformés.

Pour des raisons de clarté, les figures montrent une station de thermoformage 16 avec uniquement un bloc de moule 24 muni d'une seule chambre de thermoformage 28. Toutefois, dans la plupart des modes de réalisation envisageables, afin d'obtenir des cadences de production élevées une pluralité de chambres de thermoformage pourront être réunies dans un seul ou plusieurs blocs de moule d'une même station de thermoformage.

La station de thermoformage 16 illustrée comprend également un piston 30 de thermoformage, déplaçable dans ladite chambre de thermoformage 28, ainsi que des moyens pour introduire des banderoles de décor dans la chambre de thermoformage comprenant un bloc 32 avec une chambre d'introduction 36 de banderoles de décor 38 orientée de préférence dans la direction d'avancement de la bande.

De manière préférentielle, le piston 30 de thermoformage est apte à se déplacer uniquement dans un axe sensiblement vertical. Dans l'exemple représenté, chaque bloc de moule 24 est associé à un bloc d'introduction 32. Des bandelettes de décor sont amenées, par des moyens d'amenée jusqu'au voisinage de la chambre d'introduction 36. Des moyens non représentés ici permettent de découper des banderoles de décor 38 dans les bandelettes et de les enrouler dans les chambres d'introduction 36. Ces moyens sont par exemple analogues à ceux que décrit le brevet FR 2 793 185. Ces banderoles de décor 38 présentent la forme d'un cylindre ouvert à ses extrémités. Des tiges d'introduction 42 sont prévues pour transférer les banderoles de décor 38 enroulées depuis la chambre d'introduction 36 vers la chambre de thermoformage 28, ce transfert étant effectué latéralement par rapport au bloc de moule 24. Pour cela, la chambre de thermoformage 28 présente une ouverture axiale qui, dans cette position du bloc de moule 24, fait face à la chambre d'introduction 36.

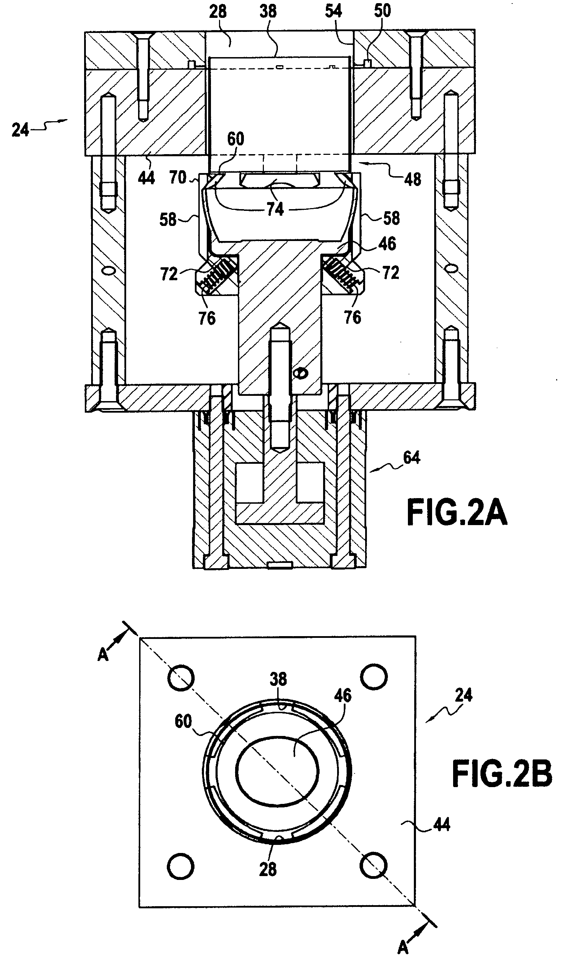

Les figures 2A et 2B représentent en détail un bloc de moule 24 dans une position de réception de la banderole de décor 38, après l'introduction de la banderole de décor 38 à travers l'ouverture axiale. Le bloc de moule 24 comporte un corps principal 44 et une pièce mobile de fond de moule 46, située au fond de la chambre de thermoformage 28, du côté opposé à l'ouverture axiale. Le corps principal 44 présente des conduits d'évacuation d'air 50, reliés à la surface interne 54 de la chambre de thermoformage 28. Dans la position initiale illustrée sur ces figures 2A et 2B, la pièce mobile 46 est dans une position ouverte, écartée en direction axiale du corps principal 44, de manière à former une ouverture latérale 48 entre la pièce mobile 46 et le corps principal 44. Le bloc de moule 24 comprend aussi un actionneur fluidique 64 pour déplacer axialement la pièce mobile 46 entre cette position ouverte et une position fermée contre le corps principal 44. Le bloc de moule 24 présente aussi, dans le mode de réalisation illustré, quatre organes rétractables 58 formant chacun un épaulement 60 face à l'ouverture axiale de la chambre de thermoformage 28. Lors de son introduction dans la chambre de thermoformage 28 à travers l'ouverture axiale, la banderole de décor 38 vient buter contre les épaulements 60 au droit de l'ouverture, de telle manière qu'après cette introduction la banderole de décor 38 est retenue par ces épaulements 60.

Chaque organe rétractable 58 comporte une première extrémité 70 et une deuxième extrémité 72. L'épaulement 60 est formé par une première surface de la première extrémité 70, en angle aigu avec une deuxième surface 74, laquelle est en contact avec la pièce mobile 46. Un ressort 76 en appui sur la deuxième extrémité 72 pousse l'organe rétractable 58, en direction parallèle à la surface de contact 74, vers l'intérieur de la chambre de thermoformage. Dans la position illustrée sur les figures 2A et 2B, les organes rétractables 58 sont en butée contre une surface extérieure de la pièce mobile 46, mais la première extrémité 70 de chaque organe rétractable 58 pénètre dans la chambre de thermoformage 28 à travers l'ouverture latérale 48.

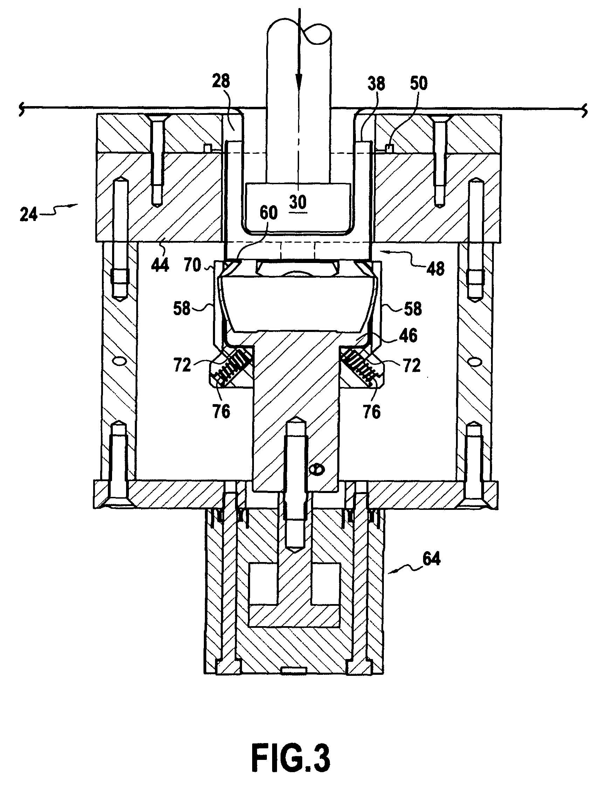

La figure 3 illustre l'étape de formage de la bande thermoplastique 10 par le piston 30 de thermoformage. Dans cette étape, le piston 30 pénètre dans la chambre 28 en direction de l'axe A à travers l'ouverture, déformant et poussant le matériau thermoplastique de la bande 10, préalablement chauffée dans la station de chauffage 14, vers l'intérieur de la chambre de thermoformage 28. Pendant cette étape, la pièce mobile 46 reste en position ouverte, et les organes rétractables 58 dans la position de réception de la banderole de décor 38 à l'intérieur de la chambre de thermoformage 28, avec les épaulements 58 qui continuent à retenir la banderole de décor 38, empêchant ainsi qu'elle soit repoussée vers le fond de la chambre de thermoformage 28.

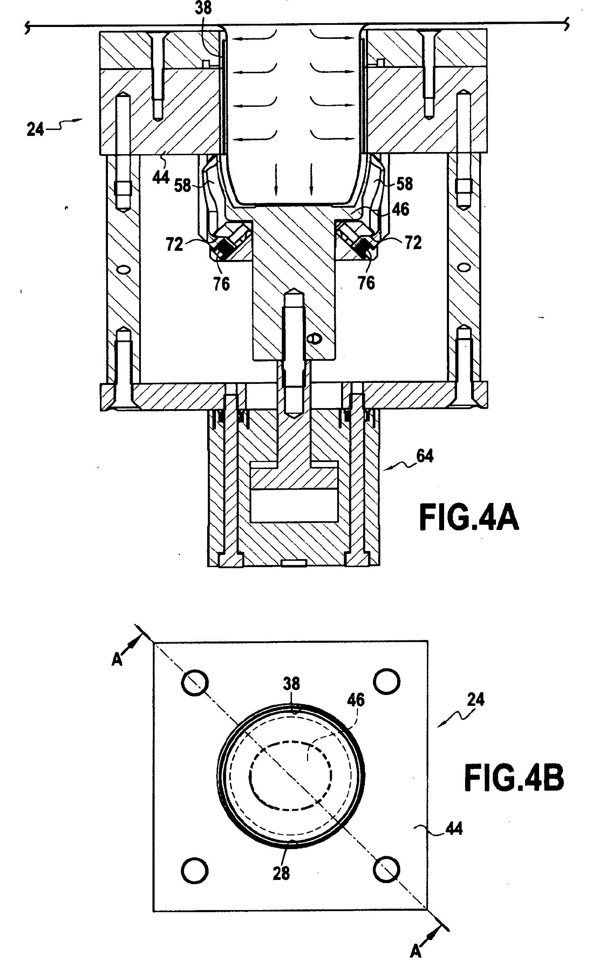

Toutefois, avant l'étape de soufflage illustrée sur les figures 4A et 4B, la pièce mobile 46 est déplacée axialement en direction du corps principal 44 par l'actionneur 64, pour arriver à une position fermée contre le corps principal 44. Pendant sa course de fermeture, les surfaces formant les épaulements 60 entrent en contact avec le corps principal 44, de telle manière que, dans chaque organe rétractable 58, l'angle aigu entre la surface en contact avec le corps principal 44 et la surface 74 en contact avec la pièce mobile 46 va provoquer la rétraction des organes rétractables 58 vers l'extérieur de manière à escamoter les épaulements 60 de la chambre de thermoformage 28 pour passer à une position de thermoformage. Ainsi, dans cette position de thermoformage illustrée sur les figures 4A et 4B, la pièce mobile 46 est fermée contre le corps principal 44 et en registre avec celui-ci, formant une surface interne 54 lisse contre laquelle le matériau thermoplastique de la bande 10 va être soufflé par un dispositif pneumatique de soufflage injectant de l'air à pression dans la cavité formée par le piston 30 dans le matériau thermoplastique. Simultanément, les conduits d'évacuation 50 aspirent la banderole de décor 38 contre la surface interne 54. Ainsi, le matériau thermoplastique de la bande 10 va être poussé par la pression de soufflage vers la surface 54 jusqu'à l'épouser avec précision, formant ainsi un récipient à l'extérieur sensiblement lisse et esthétiquement avantageux, avec une bonne intégration de la banderole de décor 38 dans cet extérieur. Après cette étape de soufflage, le récipient pourra être démoulé par déplacement vertical du bloc de moule 24.

Le déplacement de la pièce mobile 46 et des organes rétractables 58 de la position de réception à la position de thermoformage est bien sûr réversible après le démoulage des récipients, de manière à rendre les chambres de thermoformage 28 disponibles pour l'introduction des banderoles de décor 38 suivantes.

Quoique la présente invention ait été décrite en se référant à des exemples de réalisation spécifiques, il est évident que des différentes modifications et changements peuvent être effectués sur ces exemples sans sortir de la portée générale de l'invention telle que définie par les revendications. Par exemple, la station de thermoformage pourrait comporter un nombre différent de blocs de moule, et/ou chaque bloc de moule un nombre différent de chambres de thermoformage. Bien que l'invention ait été décrite en référence à une station de thermoformage à moule basculant, elle pourrait aussi s'appliquer à d'autres types d'appareils de thermoformage. Par conséquent, la description et les dessins doivent être considérés dans un sens illustratif plutôt que restrictif.

## Revendications

1. Bloc de moule (24) présentant au moins une chambre de thermoformage (28) apte à recevoir une préforme thermoplastique, ladite chambre de thermoformage (28) étant définie par une surface interne (54) et une ouverture axiale du bloc de moule (24), et tel
qu'il comporte :
un corps principal (44) et
au moins une pièce mobile (46) de fond de moule située d'un côté opposé à ladite ouverture axiale et pouvant se déplacer, par rapport audit corps principal (44), **caractérisé en ce que** la pièce mobile de fond peut se déplacer entre une position fermée contre ledit corps principal (44) et une position ouverte, dans laquelle la pièce mobile (46) de fond de moule est séparée du corps principal (44), en direction opposée à l'ouverture axiale, par une ouverture latérale (48) et que le bloc de moule comporte
au moins un organe rétractable (58) apte à pénétrer à travers ladite ouverture latérale (48) en position ouverte de la pièce mobile (46) de fond de moule pour former au moins un épaulement (60) escamotable situé dans la chambre de thermoformage (28) au droit de l'ouverture axiale.

2. Bloc de moule (24) suivant la revendication 1, comportant une pluralité d'organes rétractables (58) apte à pénétrer à travers ladite ouverture latérale (48) en position ouverte de la pièce mobile (46) de fond de moule (46) pour former des épaulements (60) escamotables dans la chambre de thermoformage (28) au droit de l'ouverture axiale.

3. Bloc de moule (24) suivant l'une quelconque des revendications 1 ou 2, comportant en outre au moins un ressort (76) pour actionner la pénétration dudit organe rétractable (58) dans la chambre de thermoformage à travers l'ouverture latérale (48).

4. Bloc de moule (24) suivant la revendication 3, dans lequel ledit épaulement (60) forme une surface de contact avec ledit corps principal (44), et ledit organe rétractable (58) comporte aussi une surface de contact avec ladite pièce mobile (46) de fond de moule, lesdites surfaces de contact avec le corps principal et la pièce mobile (46) étant arrangées avec un tel angle qu'un déplacement de la pièce mobile (46) de ladite position ouverte à ladite position fermée actionne la rétraction de l'organe rétractable (58) contre ledit ressort (76).

5. Bloc de moule (24) suivant l'une quelconque des revendications 1 à 4, comportant en outre un actionneur (64) pour déplacer ladite pièce mobile de fond de moule (46) entre lesdites positions fermée et ouverte.

6. Bloc de moule (24) suivant la revendication 5, dans lequel ledit actionneur (64) est un actionneur fluidique.

7. Bloc de moule (24) suivant l'une quelconque des revendications 1 à 6, comportant une pluralité de chambres de thermoformage.

8. Bloc de moule (24) suivant l'une quelconque des revendications 1 à 7, apte à basculer entre au moins une position de formage et soufflage et une position d'introduction d'une banderole (38) et/ou démoulage d'une pièce moulée.

9. Installation pour la fabrication de récipients (37) par thermoformage, comportant :
un bloc de moule (24) suivant l'une quelconque des revendications 1 à 8 ;
un dispositif de chauffage (14) de la préforme thermoplastique ;
un piston de formage (30) de la préforme thermoplastique apte à pénétrer, par l'ouverture, dans la chambre de thermoformage (28) ; et
un dispositif pneumatique de soufflage de la préforme thermoplastique contre une surface interne (54) de l'au moins une chambre de thermoformage (28).

10. Procédé de fabrication de récipients (37) par thermoformage dans une installation suivant la revendication 9, comportant les étapes suivantes :
introduction d'une banderole de décor (38) dans ladite chambre de thermoformage (28) du bloc de moule (24) pour arriver en butée contre ledit épaulement (60) initialement présent dans la chambre de thermoformage (28) dans une position de réception de la banderole de décor (38) avec la pièce mobile (46) de fond de moule en position ouverte ;
formage d'une préforme thermoplastique chaude par un piston (30) pénétrant dans la chambre de thermoformage (28) ; et
soufflage de la préforme contre une surface interne (54) de la chambre de thermoformage (28) ;
le procédé étant **caractérisé en ce que** ladite pièce mobile (46) de fond de moule se déplace jusqu'à la position fermée, de manière à escamoter ledit épaulement (60), avant la fin de l'étape de soufflage.

11. Procédé de fabrication de récipients (37) par thermoformage suivant la revendication 10, dans lequel la banderole de décor (38) est introduite dans la chambre de thermoformage (28) et le piston pénètre dans la chambre de thermoformage (28) à travers la même ouverture axiale.

12. Procédé de fabrication de récipients (37) par thermoformage suivant l'une quelconque des revendications 10 ou 11, comportant en outre une étape de basculement du bloc de moule (24) entre l'étape d'introduction de la banderole (38) et l'étape de formage.

13. Procédé de fabrication de récipients (37) par thermoformage suivant l'une quelconque des revendications 10 à 12, dans laquelle ladite préforme forme partie d'une bande thermoplastique (10).

14. Procédé de fabrication de récipients par thermoformage suivant la revendication 13, comportant en outre, après l'étape de soufflage, une étape de démoulage du récipient (37) mettant en oeuvre un basculement du bloc de moule (24) et un défilement simultané de la bande thermoplastique (10).

## Patentansprüche

1. Formblock (24), der wenigstens eine Thermoformkammer (28) aufweist, welche geeignet ist, einen thermoplastischen Vorformling aufzunehmen, wobei die Thermoformkammer (28) durch eine Innenfläche (54) und eine axiale Öffnung des Formblocks (24) definiert ist, und der derart ist, dass er umfasst:
einen Hauptkörper (44) und
wenigstens ein bewegliches Formbodenteil (46), das auf einer von der axialen Öffnung abgewandten Seite gelegen ist und sich gegenüber dem Hauptkörper (44) bewegen kann,
**dadurch gekennzeichnet, dass** das bewegliche Bodenteil sich zwischen einer an dem Hauptkörper (44) geschlossenen Position und einer geöffneten Position, in der das bewegliche Formbodenteil (46) in zu der axialen Öffnung entgegengesetzter Richtung durch eine seitliche Öffnung (48) von dem Hauptkörper (44) getrennt ist, bewegen kann, und dass
der Formblock wenigstens ein zurückziehbares Organ (58) umfasst, das geeignet ist, in geöffneter Position des beweglichen Formbodenteils (46) durch die seitliche Öffnung (48) hindurch einzudringen, um wenigstens eine in der Thermoformkammer (28) gegenüber der axialen Öffnung gelegene einziehbare Schulter (60) zu bilden.

2. Formblock (24) nach Anspruch 1, umfassend eine Vielzahl von zurückziehbaren Organen (58), die geeignet ist, in geöffneter Position des beweglichen Formbodenteils (46) durch die seitliche Öffnung (48) hindurch einzudringen, um in der Thermoformkammer (28) gegenüber der axialen Öffnung einziehbare Schultern (60) zu bilden.

3. Formblock (24) nach einem der Ansprüche 1 oder 2, ferner umfassend wenigstens eine Feder (76), um das Eindringen des zurückziehbaren Organs (58) in die Thermoformkammer durch die seitliche Öffnung (48) anzutreiben.

4. Formblock (24) nach Anspruch 3, wobei die Schulter (60) eine Kontaktfläche mit dem Hauptkörper (44) bildet und das zurückziehbare Organ (58) auch eine Kontaktfläche mit dem beweglichen Formbodenteil (46) umfasst, wobei die Kontaktflächen mit dem Hauptkörper und dem beweglichen Teil (46) mit einem solchen Winkel angeordnet sind, dass ein Bewegen des beweglichen Teils (46) von der geöffneten Position in die geschlossene Position das Zurückziehen des zurückziehbaren Organs (58) gegen die Feder (76) antreibt.

5. Formblock (24) nach einem der Ansprüche 1 bis 4, ferner umfassend einen Antrieb (64), um das bewegliche Formbodenteil (46) zwischen der geschlossenen und der geöffneten Position zu bewegen.

6. Formblock (24) nach Anspruch 5, wobei der Antrieb (64) ein fluidischer Antrieb ist.

7. Formblock (24) nach einem der Ansprüche 1 bis 6, der eine Vielzahl von Thermoformkammern umfasst.

8. Formblock (24) nach einem der Ansprüche 1 bis 7, der geeignet ist, zwischen wenigstens einer Formungs- und Blasposition und einer Position zum Einführen eines Bandes (38) und/oder zum Ausformen eines Formteils zu kippen.

9. Anlage für die Herstellung von Behältern (37) durch Thermoformen, umfassend:
einen Formblock (24) nach einem der Ansprüche 1 bis 8,
eine Vorrichtung zum Erhitzen (14) des thermoplastischen Vorformlings,
einen Kolben zum Formen (30) des thermoplastischen Vorformlings, der geeignet ist, über die Öffnung in die Thermoformkammer (28) einzudringen, und
eine pneumatische Vorrichtung zum Blasen des thermoplastischen Vorformlings gegen eine Innenfläche (54) der wenigstens einen Thermoformkammer (28).

10. Verfahren zur Herstellung von Behältern (37) durch Thermoformen in einer Anlage nach Anspruch 9, umfassend die folgenden Schritte:
Einführen eines Zierbandes (38) in die Thermoformkammer (28) des Formblocks (24), um an der Schulter (60), welche anfangs in der Thermoformkammer (28) in einer Position zur Aufnahme des Zierbandes (38) vorhanden ist, in Anschlag zu gelangen, wobei sich das bewegliche Formbodenteil (46) in geöffneter Position befindet,
Formen eines heißen thermoplastischen Vorformlings durch einen in die Thermoformkammer (28) eindringenden Kolben (30) und
Blasen des Vorformlings gegen eine Innenfläche (54) der Thermoformkammer (28),
wobei das Verfahren **dadurch gekennzeichnet ist, dass** das bewegliche Formbodenteil (46) sich bis in die geschlossene Position bewegt, so dass die Schulter (60) vor dem Ende des Blasschrittes eingezogen wird.

11. Verfahren zur Herstellung von Behältern (37) durch Thermoformen, nach Anspruch 10, wobei durch die gleiche axiale Öffnung das Zierband (38) in die Thermoformkammer (28) eingeführt wird und der Kolben in die Thermoformkammer (28) eindringt.

12. Verfahren zur Herstellung von Behältern (37) durch Thermoformen, nach einem der Ansprüche 10 oder 11, ferner umfassend einen Schritt zum Kippen des Formblocks (24) zwischen dem Schritt des Einführens des Bandes (38) und dem Formungsschritt.

13. Verfahren zur Herstellung von Behältern (37) durch Thermoformen, nach einem der Ansprüche 10 bis 12, wobei der Vorformling Teil einer thermoplastischen Bahn (10) ist.

14. Verfahren zur Herstellung von Behältern durch Thermoformen, nach Anspruch 13, das ferner nach dem Blasschritt einen Schritt zum Ausformen des Behälters (37) umfasst, bei dem ein Kippen des Formblocks (24) und ein gleichzeitiges Ablaufen der thermoplastischen Bahn vollzogen wird.

## Claims

1. A mold block (24) presenting at least one thermoforming chamber (28) that is suitable for receiving a thermoplastic preform, said thermoforming chamber (28) being defined by an inside surface (54) and an axial opening of the mold block (24), and such that it comprises:
· a main body (44); and
· at least one movable mold-bottom part (46) that is situated at an end remote from said axial opening and that is movable relative to said main body (44); **characterized in that** the movable mold-bottom part is movable between a closed position against said main body (44) and an open position in which the movable mold-bottom part (46) is separated from the main body (44) going away from the axial opening by a side opening (48); and that the mold block comprises at least one retractable member (58) that is capable of penetrating through said side opening (48) in the open position of the movable mold-bottom part (46) so as to form at least one removable shoulder (60) that is situated in the thermoforming chamber (28) in register with the axial opening.

2. A mold block (24) according to claim 1, including a plurality of retractable members (58) that are capable of penetrating through said side opening (48) in the open position of the movable mold-bottom part (46) so as to form removable shoulders (60) in the thermoforming chamber (28) in register with the axial opening.

3. A mold block (24) according to claim 1 or claim 2, further including at least one spring (76) for causing said retractable member (58) to penetrate into the thermoforming chamber through the side opening (48).

4. A mold block (24) according to claim 3, wherein said shoulder (60) forms a contact surface with said main body (44), and said retractable member (58) also includes a contact surface with said movable mold-bottom part (46), said contact surfaces with the main body and with the movable part (46) being arranged with such an angle that movement of the movable part (46) from said open position to said closed position causes the retractable member (58) to retract against said spring (76).

5. A mold block (24) according to any one of claims 1 to 4, further including an actuator (64) for moving said movable mold-bottom part (46) between said closed and open positions.

6. A mold block (24) according to claim 5, wherein said actuator (64) is a fluid actuator.

7. A mold block (24) according to any one of claims 1 to 6, including a plurality of thermoforming chambers.

8. A mold block (24) according to any one of claims 1 to 7, capable of tilting between at least a forming and blowing position and a position for inserting a label band (38) and/or for unmolding a molded piece.

9. An installation for manufacturing containers (37) by thermoforming, said installation comprising:
· a mold block (24) according to any one of claims 1 to 8;
· a heater device (14) for heating the thermoplastic preform;
· a forming piston (30) for forming the thermoplastic preform, said piston being capable of penetrating, via the opening, into the thermoforming chamber (28); and
· a pneumatic blower device for blowing the thermoplastic preform against an inside surface (54) of the at least one thermoforming chamber (28).

10. A method of manufacturing containers (37) by thermoforming in an installation according to claim 9, said method comprising the following steps:
· inserting a label band (38) into said thermoforming chamber (28) of the mold block (24) so as to come into abutment against said shoulder (60) that is initially present in the thermoforming chamber (28) in a position for receiving the label band (38), with the movable mold-bottom part (46) in its open position;
· forming a hot thermoplastic preform by means of a piston (30) penetrating into the thermoforming chamber (28); and
· blowing the preform against an inside surface (54) of the thermoforming chamber (28);
the method being **characterized in that** said movable mold-bottom part (46) moves into its closed position, in such a manner as to remove said shoulder (60) before the end of the blowing step.

11. A method of manufacturing containers (37) by thermoforming according to claim 10, wherein the label band (38) is inserted into the thermoforming chamber (28), and the piston penetrates into the thermoforming chamber (28) through the same axial opening.

12. A method of manufacturing containers (37) by thermoforming according to claim 10 or claim 11, further including a step of tilting the mold block (24) between the step of inserting the label band (38) and the forming step.

13. A method of manufacturing containers (37) by thermoforming according to any one of claims 10 to 12, wherein said preform forms part of a thermoplastic sheet (10).

14. A method of manufacturing containers by thermoforming according to claim 13, further including, after the blowing step, a step of unmolding the container (37), which step entails tilting the mold block (24) and simultaneously advancing the thermoplastic sheet (10).
